# EUROPÄISCHE PATENTANMELDUNG

(11) **EP 1 383 268 A1**
(43) Veröffentlichungstag der Anmeldung: **21.01.2004**
(21) Anmeldenummer: 03014451.3
(22) Anmeldetag: 01.07.2003
(51) Int. Cl.: H04L 12/10

(54) **Datenendgerät mit Erkennungsvorrichtung für Stromversorgung und Datennetz**

(30) Priorität: 04.07.2002 DE 10230120
(71) Anmelder: Tenovis GmbH & Co. KG, 60326 Frankfurt am Main (DE)
(72) Erfinder: Wacker, Jörg Dr., 64287 Darmstadt (DE)
(74) Vertreter: Habenicht, Wieland

(57) **Zusammenfassung**

Die Erfindung betrifft ein Datenendgerät (1; 10 - 12) mit wenigstens einem ersten und einem zweiten Stromversorgungsanschluss (3a, 3b) für die Versorgung mit elektrischer Leistung und wenigstens einem Prüfelement (4) zwischen dem ersten und zweiten Stromversorgungsanschluss (3a, 3b), das eine Kenngröße zwischen dem ersten und zweiten Stromversorgungsanschluss (3a, 3b) definiert.

Um eine Kaskadierung von Datenendgeräten in PoLAN- Systemen mit Adernspeisung zu ermöglichen, umfasst das Datenendgerät ein Schaltelement (5), das in Reihe mit dem Prüfelement (4) zwischen den ersten und den zweiten Stromversorgungsanschluss (3a, 3b) geschaltet ist, und eine Steuerleitung (5a), über die das Schaltelement (5) durch ein externes Signal geöffnet werden kann, so dass die Verbindung zwischen der ersten und den zweiten Stromversorgungsanschluss (3a, 3b) über das Prüfelement (4) unterbrochen wird.

Bei einem entsprechenden Datennetz sind die Datenendgeräte (10 - 12) in einer vorgegebenen Reihenfolge angeordnet und wird das Schaltelement (5) jedes der Datenendgeräte (10 - 12) automatisch geöffnet, wenn ein weiteres Datenendgerät (11; 12) folgt.

## Beschreibung

Die Erfindung betrifft die Stromversorgung (Adernspeisung) von Datenendgeräten in Datennetzen (LANs) und insbesondere ein Datennetz mit Stromversorgung von mehreren Datenendgeräten gemäß dem Oberbegriff von Anspruch 1.

Die sog. PoLAN- (Power over LAN) Technik erlaubt den Betrieb von Datenendgeräten wie z.B. IP- Phones, WLAN- Geräten oder "Bluetooth Access Points" in Ethernet-LANs, ohne dass ein Steckernetzgerät zur Spannungsversorgung benötigt wird. Aktuell sind zwei Systeme verfügbar: die Phantomspeisung der Firma Cisco und die Adernspeisung der Firma PowerDsine.

Bei dem Stand der Technik wird vor dem Aufschalten der Versorgungsspannung in einer Detektionsphase die PoLAN- Fähigkeit des Datenendgerätes überprüft.

Die Architektur der Systeme mit Adernspeisung hat den Nachteil, dass keine Kaskadierung von Datenendgeräten vorgesehen ist. Jedes Datenendgerät muss über ein separates LAN-Kabel mit einem Power Hub verbunden werden.

Die Aufgabe der Erfindung ist es, eine Kaskadierung von Datenendgeräten in PoLAN- Systemen mit Adernspeisung zu ermöglichen.

Diese Aufgabe wird durch das Datennetz nach Anspruch 1 gelöst. Bevorzugte Ausführungsformen der Erfindung sind Gegenstand der Unteransprüche.

Erfindungsgemäß wird ein (im Stand der Technik bereits vorhandenes) Prüfelement in dem Datenendgerät durch die Stromversorgung überprüft. Entspricht sein Messwert einem erwarteten Wert, wird das Datenendgerät mit elektrischer Leistung versorgt, anderenfalls nicht. Um die Beeinflussung des Messwertes bei der Überprüfung des Prüfelements durch Parallelschaltung von mehreren Datenendgeräten auszuschließen, wird erfindungsgemäß beim Hinzufügen jeweils eines weiteren Datenendgerätes in das Datennetz das Prüfelement des vorangehenden Datenendgerätes abgekoppelt, so dass die Stromversorgung immer nur das letzte Prüfelement in der Kette der Datenendgeräte erfasst.

Das erfindungsgemäße Datenendgerät mit wenigstens einem ersten und einem zweiten Stromversorgungsanschluss für die Versorgung des Datenendgerätes mit elektrischer Leistung und wenigstens einem Prüfelement zwischen dem ersten und zweiten Stromversorgungsanschluss, das eine Kenngröße zwischen dem ersten und zweiten Stromversorgungsanschluss definiert, ist gekennzeichnet durch ein Schaltelement, das in Reihe mit dem Prüfelement zwischen den ersten und den zweiten Stromversorgungsanschluss geschaltet ist, und eine Steuerleitung, über die das Schaltelement durch ein externes Signal geöffnet werden kann, so dass die Verbindung zwischen der ersten und den zweiten Stromversorgungsanschluss über das Prüfelement unterbrochen wird.

Insbesondere wird bei dem Datenendgerät der erste Stromversorgungsanschluss auf einen fünften Stromversorgungsanschluss zurückgeschleift und ist die Steuerleitung an einen achten Stromversorgungsanschluss angeschlossen, der durch eine Kommunikationsverbindung in einem Datennetz mit dem fünften Stromversorgungsanschluss eines nachgeschalteten Datenendgerätes verbunden wird.

Darüber hinaus ist es möglich, dass der erste zu einem vierten Stromversorgungsanschluss und der zweite zu einem dritten Stromversorgungsanschluss durchgeschleift wird, wobei in einem Datennetz durch eine Kommunikationsverbindung der vierte Stromversorgungsanschluss des Datenendgerätes mit dem ersten Stromversorgungsanschluss eines nachgeschalteten Datenendgerätes und der dritte Stromversorgungsanschluss des Datenendgerätes mit dem zweiten Stromversorgungsanschluss des nachgeschalteten Datenendgerätes verbunden wird.

In einer bevorzugten Ausführungsform der Erfindung ist das Prüfelement ein ohmscher Widerstand und die Kenngröße entsprechend ein Widerstandswert. In einer alternativen bevorzugten Ausführungsform der Erfindung ist das Prüfelement ein Kondensator und die Kenngröße entsprechend ein kapazitiver Wert.

Das erfindungsgemäße Datennetz mit mehreren entsprechenden Datenendgeräten, wenigstens einer Stromversorgung für das Versorgen der mehreren, parallel verbundenen Datenendgeräte mit elektrischer Leistung, wobei die Stromversorgung die Kenngröße erfasst, und jeweils einer Kommunikationsverbindung zwischen den mehreren Datenendgeräten für das Übertragen von Daten und von elektrischer Leistung an den ersten und den zweiten Stromversorgungsanschluss über wenigstens eine erste und eine zweite Versorgungsleitung, ist dadurch gekennzeichnet, dass die Datenendgeräte in einer vorgegebenen Reihenfolge angeordnet sind, jedes der Datenendgeräte ein Schaltelement umfasst, das in Reihe mit dem Prüfelement zwischen den ersten und den zweiten Stromversorgungsanschluss geschaltet ist, und das Schaltelement jedes der Datenendgeräte automatisch geöffnet wird, wenn nach dem Datenendgerät in der vorgegebenen Reihenfolge ein weiteres Datenendgerät folgt, so dass die von der Stromversorgung erfasste Kenngröße unabhängig von der Anzahl der Datenendgeräte gleich bleibt.

Ein Vorteil der Erfindung besteht darin, dass Zusatzkosten für Verkabelung und Power- Hub- Ports eingespart werden, sofern die gesamte Leistungsaufnahme der kaskadierten Datenendgeräte die zur Verfügung stehende Leistung am Ausgangsport des Power- Hubs nicht übersteigt. Insbesondere bei WLAN- Geräten und "Bluetooth- Access- Points", die zur Funkversorgung von größeren Flächen dienen, können durch die Kaskadierung erhebliche Kosten gegenüber der Sternverkabelung eingespart werden.

Weitere Merkmale und Vorteile der Erfindung ergeben sich aus der folgenden Beschreibung von bevorzugten Ausführungsbeispielen, bei der Bezug genommen wird auf die beigefügten Zeichnungen.

Fig. 1 zeigt ein Datenendgerät nach dem Stand der Technik.

Fig. 2 zeigt eine Ausführungsform des erfindungsgemäßen Datenendgerätes.

Fig. 3 zeigt ein Datennetz mit erfindungsgemäßen Datenendgeräten.

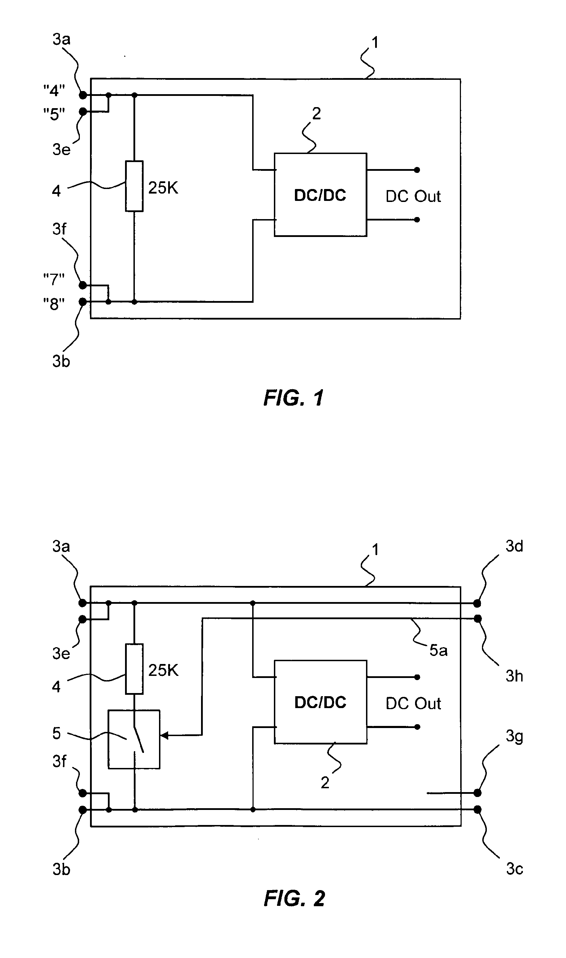

In Fig. 1 ist ein Datenendgerät 1 nach dem Stand der Technik gezeigt. Es hat neben (nicht gezeigten) internen Schaltkreisen für die Datenverarbeitung u.a. einen internen Spannungsgenerator 2 für die interne Versorgung der Datenverarbeitungsschaltkreise mit elektrischer Leistung. Der Spannungsgenerator ist über Stromversorgungsanschlüsse 3a und 3b mit der externen Stromversorgung verbunden.

Die Stromversorgung der Datenendgeräte 1 erfolgt beim Stand der Technik über die freien Adernpaare "4" und "5" sowie "7" und "8" eines "CAT-5"-Kabels. Die Stromversorgung erfolgt durch eine (nicht gezeigte) PoLAN- fähige Spannungsquelle (Power Sourcing Element, PSE), die weiter unten erläutert wird. Die benötigte Spannung beträgt dabei 48V.

Vor dem Aufschalten einer Versorgungsspannung von 48V wird durch die Stromversorgung die Existenz eines Prüfelements 4 überprüft. Dieses Prüfelement 4 ist in dem in Fig. 1 gezeigten Datenendgerät 1 ein ohmscher 25-kΩ-Widerstand zwischen dem ersten und zweiten Stromversorgungsanschluss 3a bzw. 3b. Durch den Widerstand wird eine Kenngröße zwischen dem ersten und zweiten Stromversorgungsanschluss 3a bzw. 3b definiert, nämlich der Abschlusswiderstand, der von der Stromversorgung erfasst werden kann.

Bei der Überprüfung des Prüfelements 4 werden zunächst sequentiell 12V und 24V an das Datenendgerät 1 gelegt. Liegt der gemessene Widerstand innerhalb der spezifizierten Toleranzgrenzen von beispielsweise +-5%, so wird das Datenendgerät 1 als PoLAN- fähig erkannt und mit 48V versorgt.

Durch eine Kaskadierung von mehreren Datenendgeräten 1 würde der gemessene Widerstand der Kaskade absinken. Durch das Verbinden von N Datenendgeräten 1 parallel mit der Spannungsversorgung, sinkt der von der Stromversorgung als Kenngröße gemessene Wert proportional zu 1/N. Beispielsweise liegt bei 2 kaskadierten Datenendgeräten der Eingangswiderstand statt bei 25 kΩ bei 12,5 kΩ und damit außerhalb des genannten Toleranzbereiches.

Die Folge wäre eine unerwünschte Abschaltung der Spannungsversorgung. Dementsprechend wird erfindungsgemäß ein Schaltelement 5 vorgesehen, das das Prüfelement je nach Existenz eines weiteren Datenendgerätes aktiviert oder deaktiviert.

Der Aufbau eines erfindungsgemäßen Datenendgerätes mit einem Schaltelement 5 ist in Fig. 2 gezeigt. Das Schaltelement 5 ist in Reihe mit dem Prüfelement 4 zwischen den ersten und den zweiten Stromversorgungsanschluss 3a bzw. 3b geschaltet und wird über eine Steuerleitung 5a angesteuert. Die Steuerleitung 5a ist über einen weiter unten erläuterten Verbinder nach außen geführt, so dass ein externes Signal an das Schaltelement 5 angelegt werden kann. Das Schaltelement 5 ist geschlossen, wenn kein externes Signal auf der Steuerleitung 5a anliegt, d.h. wenn das Datenendgerät 1 beispielsweise als einziges oder als letztes mit der Stromversorgung verbunden ist. Das Schaltelement 5 wird dagegen geöffnet, wenn ein externes Signal auf der Steuerleitung 5a anliegt. Dadurch wird die Verbindung zwischen der ersten und den zweiten Stromversorgungsanschluss 3a, 3b unterbrochen, so dass der Widerstand zwischen den beiden Stromversorgungsanschlüssen 3a und 3b nicht mehr durch das Prüfelement 4 gegeben ist. Durch die Ansteuerung des Schaltelements 5 in Reihe mit dem 25-kΩ-Widerstand 4 kann dieser von den nachfolgenden Datenendgeräten folglich automatisch zugeschaltet oder getrennt werden. Somit ist unabhängig von der Anzahl der kaskadierten Datenendgeräte immer nur ein 25-kΩ-Widerstand 4 für die PoLAN-fähige Spannungsquelle "sichtbar".

Das Steuersignal auf der Steuerleitung 5a kann aus dem von einem nachgeschalteten Datenendgerät zurückgeschleiften Messsignal der von der PoLAN-fähigen Spannungsquelle gewonnen werden. Dazu weist das erfindungsgemäße Datenendgerät 1 wie in Fig. 2 gezeigt die im folgenden erläuterten Anschlüsse auf. Der erste Stromversorgungsanschluss 3a wird auf einen fünften Stromversorgungsanschluss 3e zurückgeschleift und steht damit als Steuersignal für das Schaltelement 4 eines in einem Datennetz vorgeschalteten Datenendgerät zur Verfügung. Dies wird im einzelnen weiter unten erläutert. Darüber hinaus kann bei dem Datenendgerät 1 der zweite Stromversorgungsanschluss 3b auf einen sechsten Stromversorgungsanschluss 3f zurückgeschleift werden.

Zur Vereinfachung der Anschlüsse und Verbindungen in einem Datennetz wird außerdem der erste Stromversorgungsanschluss 3a intern in dem Datenendgerät 1 mit einem vierten Stromversorgungsanschluss 3d verbunden, und analog wird der zweite Stromversorgungsanschluss 3b intern in dem Datenendgerät 1 mit einem dritten Stromversorgungsanschluss 3c verbunden. So kann über einen (nicht gezeigten) Eingangsstecker mit den freien Adernpaaren "4" und "5" sowie "7" und "8" eines "CAT-5"-Kabels die Versorgung des Datenendgerätes 1 durch ein vorgeschaltetes Datenendgerät sichergestellt werden, und über einen (nicht gezeigten) Ausgangsstecker kann entsprechend die Versorgung eines nachgeschalteten Datenendgerätes sichergestellt werden. Die Anschlüsse 3a, 3b, 3e und 3f sind dabei in dem Eingangsstecker integriert, weitere Anschlüsse wie 3c, 3d, 3g und 3h sind in dem Ausgangsstecker integriert.

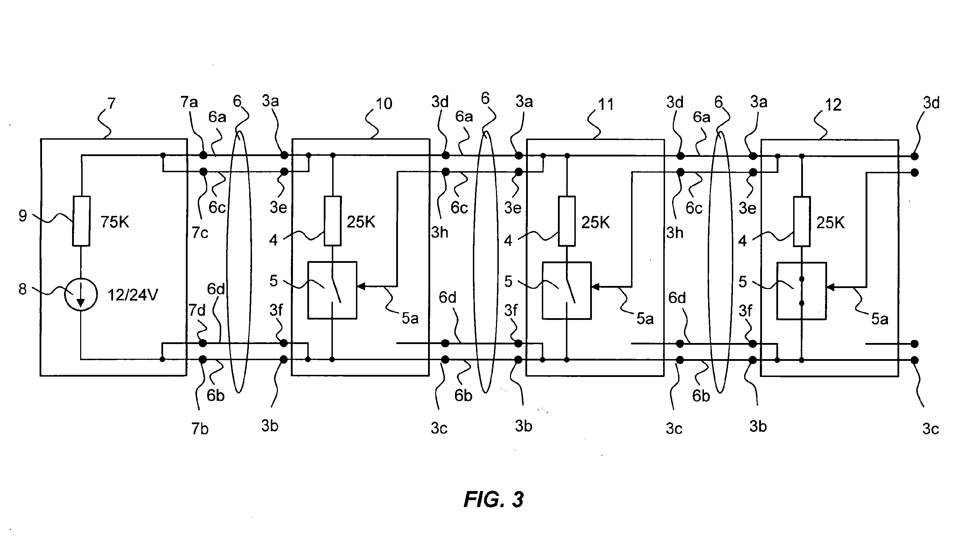

Die Anordnung der Datenendgeräte 1 und ihre Verbindung untereinander wird im folgenden anhand eines Datennetzes erläutert, das in Fig. 3 gezeigt ist.

In dem Datennetz werden zur Überprüfung ihrer PoLAN- Fähigkeit drei Datenendgeräte 10, 11, 12 durch eine Stromversorgung 7 mit einem elektrischen Prüfsignal versorgt. (Die Stromversorgung für die Versorgung der Datenendgeräte im Betrieb ist in den Figuren nicht dargestellt.) Die Stromversorgung umfasst eine Spannungsquelle 8 und mit einem Innenwiderstand 9 von 75 kΩ.

Die Datenendgeräte 10, 11 und 12 sind durch Kommunikationsverbindungen 6 untereinander und mit der Stromversorgung 7 verbunden. Die Kommunikationsverbindung 6 umfasst (nicht gezeigte) Kommunikationsleitungen sowie Versorgungsleitungen 6a, 6b, 6c und 6d. Die Versorgungsleitung 6a ist jeweils mit dem eingangsseitigen Stromversorgungsanschluss 3a bzw. mit dem ausgangsseitigen Stromversorgungsanschluss 3d eines Datenendgerätes verbunden. Analog ist die Versorgungsleitung 6b einerseits mit dem eingangsseitigen Stromversorgungsanschluss 3b und andererseits mit dem ausgangsseitigen Stromversorgungsanschluss 3c eines Datenendgerätes verbunden. Die Stromversorgung weist die Anschlüsse 7a bis 7d auf, die jeweils mit der Versorgungsleitung 6a bis 6d der Kommunikationsverbindung 6 verbunden sind.

Im folgenden wird die automatische Aktivierung/Deaktivierung des Prüfelements eines Datenendgerätes in einem Datennetz erläutert. Der eingangsseitige Stromversorgungsanschluss 3e des Datenendgerätes 11 bzw. 12 wird in dem Datennetz durch die Versorgungsleitung 6c der Kommunikationsverbindung 6 mit dem ausgangsseitigen achten Stromversorgungsanschluss 3h des vorgeschalteten Datenendgerätes 10 bzw. 11 verbunden. Der achte Stromversorgungsanschluss 3h ist der Verbinder mit der nach außen geführten Steuerleitung 5a. Durch das Anlegen einer Versorgungsspannung an das Datenendgerät 11 bzw. 12 wird aufgrund der Rückschleifung der Spannung auf den fünften Stromversorgungsanschluss 3e und der Verbindung mit dem achten Stromversorgungsanschluss 3h ein Steuersignal an ein im Datennetz vorangehendes Datenendgerät 10 bzw. 11 ausgegeben, das dazu führt, dass das Schaltelement 5 geöffnet wird und somit der 25-kΩ-Widerstand 4 des Datenendgerätes abgekoppelt wird.

Bei dieser Anordnung der Datenendgeräte in dem Datennetz werden die Datenendgeräte 10 - 12 insofern in einer vorgegebenen Reihenfolge angeordnet, als sichergestellt sein muss, dass das Prüfelement 4 des vorangehenden Datenendgerät durch das jeweils nachgeschaltete Datenendgerät aktiviert/deaktiviert werden können muss.

In Fig. 1 bis 3 ist als Prüfelement 4 ein ohmscher Widerstand dargestellt. Entsprechend ist die Kenngröße ein Widerstandswert. Die Erfindung ist jedoch nicht auf Widerstände als Prüfelemente beschränkt. Eine weitere Einsatzmöglichkeit der Erfindung stellt die Aktivierung bzw. Deaktivierung von (nicht gezeigten) Parallelkapazitäten bei einem Kapazitätsdetektionsverfahren dar. In diesem Fall ist das Prüfelement ein Kondensator und die Kenngröße ein kapazitiver Wert.

Mit dem Aufbau des Datennetzes nach Fig. 3 mit den Datenendgeräten 10 bis 12, die jeweils wenigstens einen ersten und einen zweiten Stromversorgungsanschluss 3a, 3b für die Versorgung des Datenendgerätes mit elektrischer Leistung und wenigstens ein Prüfelement 4 zwischen dem ersten und zweiten Stromversorgungsanschluss 3a, 3b umfassen, das eine Kenngröße zwischen dem ersten und zweiten Stromversorgungsanschluss 3a, 3b definiert, lässt sich so mit wenigstens einer Stromversorgung über jeweils eine Kommunikationsverbindung 6 zwischen den Datenendgeräten 10 bis 12 sicherstellen, dass das Schaltelement 5 jedes der Datenendgeräte 10 bis 12 automatisch geöffnet wird, wenn nach dem Datenendgerät ein weiteres Datenendgerät folgt. So bleibt die von der Stromversorgung 7 erfasste Kenngröße unabhängig von der Anzahl der Datenendgeräte immer gleich.

Mit dem erfindungsgemäßen Datenendgerät und dem entsprechenden Netz lässt sich so der IEEE- Standard. 802.3af "CSMA/CD ACCESS METHOD AND PHYSICAL LAYER SPECIFICATIONS - DATA TERMINAL EQUIPMENT (DTE) POWER VIA MEDIA DEPENDENT INTERFACE (MDI)" erfüllen, der die proprietären Lösungen weltweit ablösen soll, und mit der Überprüfung des Kennwertes des Prüfelements 4 lässt sich schnell erkennen, ob bei kaskadierten Datenendgeräten das jeweils zugeschaltete Datenendgerät PoLAN- fähig ist oder nicht.

### Bezugszeichen

- 1: Datenendgerät
- 2: interner DC/DC- Wandler in Datenendgerät
- 3: Anschlussleitungen des Datenendgerätes, 3a Eingangsanschluss, 3b Ausgangsanschluss
- 4: interner Widerstand in Datenendgerät
- 5: Schalterelement, 5a Steuerleitung
- 6: Kommunikationsleitung, 6a erste Versorgungsleitung, 6b zweite Versorgungsleitung, 6c Rückschleifungsleitung für Steuersignal, 6d Zusatzleitung
- 7: Stromversorgung für LAN, 7a bis 7d Stromversorgungsanschlüsse
- 8: Innenwiderstand der Stromversorgung
- 9: Spannungsquelle
- 10: erstes Datenendgerät im LAN
- 11: zweites Datenendgerät im LAN
- 12: drittes Datenendgerät im LAN

## Patentansprüche

1. Datenendgerät mit
wenigstens einem ersten und einem zweiten Stromversorgungsanschluss (3a, 3b) für die Versorgung des Datenendgerätes (1; 10 - 12) mit elektrischer Leistung und
wenigstens einem Prüfelement (4) zwischen dem ersten und zweiten Stromversorgungsanschluss (3a, 3b), das eine Kenngröße zwischen dem ersten und zweiten Stromversorgungsanschluss (3a, 3b) definiert,
**gekennzeichnet durch**
ein Schaltelement (5), das in Reihe mit dem Prüfelement (4) zwischen den ersten und den zweiten Stromversorgungsanschluss (3a, 3b) geschaltet ist, und
eine Steuerleitung (5a), über die das Schaltelement (5) **durch** ein externes Signal geöffnet werden kann, so dass die Verbindung zwischen der ersten und den zweiten Stromversorgungsanschluss (3a, 3b) über das Prüfelement (4) unterbrochen wird.

2. Datenendgerät nach Anspruch 1,
**dadurch gekennzeichnet, dass**
der erste Stromversorgungsanschluss (3a) auf einen fünften Stromversorgungsanschluss (3e) zurückgeschleift wird und
die Steuerleitung (5a) an einen achten Stromversorgungsanschluss (3h) angeschlossen ist, der durch eine Kommunikationsverbindung (6) in einem Datennetz mit dem fünften Stromversorgungsanschluss (3e) eines nachgeschalteten Datenendgerätes (11, 12) verbunden wird.

3. Datenendgerät nach Anspruch 1 oder 2,
**dadurch gekennzeichnet, dass**
der erste (3a) zu einem vierten Stromversorgungsanschluss (3d) und der zweite (3b) zu einem dritten Stromversorgungsanschluss (3c) durchgeschleift wird,
wobei in einem Datennetz durch eine Kommunikationsverbindung (6) der vierte Stromversorgungsanschluss (3d) des Datenendgerätes mit dem ersten Stromversorgungsanschluss (3a) eines nachgeschalteten Datenendgerätes und der dritte Stromversorgungsanschluss (3c) des Datenendgerätes mit dem zweiten Stromversorgungsanschluss (3b) des nachgeschalteten Datenendgerätes verbunden wird.

4. Datenendgerät nach einem der vorangehenden Ansprüche,
**dadurch gekennzeichnet, dass**
das Prüfelement ein ohmscher Widerstand (4) ist und die Kenngröße ein Widerstandswert ist.

5. Datenendgerät nach einem der Ansprüche 1 bis 3,
**dadurch gekennzeichnet, dass**
das Prüfelement ein Kondensator ist und die Kenngröße ein kapazitiver Wert ist.

6. Datennetz mit
mehreren Datenendgeräten (10 - 12), die jeweils umfassen: wenigstens einen ersten und einen zweiten Stromversorgungsanschluss (3a, 3b) für die Versorgung des Datenendgerätes (10 - 12) mit elektrischer Leistung und wenigstens ein Prüfelement (4) zwischen dem ersten und zweiten Stromversorgungsanschluss (3a, 3b), das eine Kenngröße zwischen dem ersten und zweiten Stromversorgungsanschluss (3a, 3b) definiert,
wenigstens einer Stromversorgung (7) für das Versorgen der mehreren, parallel verbundenen Datenendgeräte (1) mit elektrischer Leistung, wobei die Stromversorgung (7) die Kenngröße erfasst, und
jeweils einer Kommunikationsverbindung (6) zwischen den mehreren Datenendgeräten (10 - 12) für das Übertragen von Daten und von elektrischer Leistung an den ersten und den zweiten Stromversorgungsanschluss (3a, 3b) über wenigstens eine erste (6a) und eine zweite (6b) Versorgungsleitung,
**dadurch gekennzeichnet, dass**
die Datenendgeräte (10 - 12) in einer vorgegebenen Reihenfolge angeordnet sind,
jedes der Datenendgeräte (10 - 12) ein Schaltelement (5) umfasst, das in Reihe mit dem Prüfelement (4) zwischen den ersten und den zweiten Stromversorgungsanschluss (3a, 3b) geschaltet ist, und
das Schaltelement (5) jedes der Datenendgeräte (10 - 12) automatisch geöffnet wird, wenn nach dem Datenendgerät (10; 11) in der vorgegebenen Reihenfolge ein weiteres Datenendgerät (11; 12) folgt, so dass die von der Stromversorgung (7) erfasste Kenngröße unabhängig von der Anzahl der Datenendgeräte (10-12) gleich bleibt.
